# EUROPÄISCHE PATENTSCHRIFT

(11) **EP 1 172 718 B1**
(45) Veröffentlichungstag und Bekanntmachung des Hinweises auf die Patenterteilung: **12.09.2007**
(21) Anmeldenummer: 00115294.1
(22) Anmeldetag: 14.07.2000
(51) Int. Cl.: G05B 19/4093, B23Q 3/155

(54) **System und Verfahren zur Identifizierung von Werkzeugen und/oder Werkzeugteilen von Werkzeugmaschinen**
System and method for identifying tools and/or parts of tools in machine tools
Système et méthode pour l'identification d'outils et/ou de parties d'outils dans les machines-outils

(43) Veröffentlichungstag der Anmeldung: 16.01.2002
(73) Patentinhaber: TRUMPF Werkzeugmaschinen GmbH + Co. KG, 71254 Ditzingen (DE)
(72) Erfinder: Hetzer, Uwe, 71254 Ditzingen (DE)
(74) Vertreter: Kohler Schmid Möbus

(56) Entgegenhaltungen:
- EP-A- 0 737 541
- WO-A-94/02284
- US-A- 4 588 339
- US-A- 4 922 591
- US-A- 5 046 014
- PATENT ABSTRACTS OF JAPAN vol. 013, no. 217 (M-828), 22. Mai 1989 (1989-05-22) & JP 01 034629 A (TOSHIBA CORP;OTHERS: 01), 6. Februar 1989 (1989-02-06)

## Beschreibung

Die Erfindung betrifft ein System sowie ein damit durchführbares Verfahren zur Identifizierung von Werkzeugen und/oder Werkzeugteilen von Werkzeugmaschinen, insbesondere von Stanzmaschinen, umfassend wenigstens eine Kennung für Werkzeuge bzw. wenigstens eine Kennung für Werkzeugteile sowie eine Erfassungseinrichtung, für welche die Kennungen in einer Erfassungsposition zugänglich sind und mittels derer die Kennungen in der Erfassungsposition erfasst werden.

Ein derartiges System sowie ein derartiges Verfahren sind bekannt aus US-A-5,046,014. Dies Druckschrift beschreibt eine Revolverstanze mit an der Werkzeugaufnahme der Stanzstation ein- und auswechselbaren Stempeln, an deren Kopfteilen Kennungen in Form von Barcodes untrennbar aufgedruckt sind. Zur Erfassung der Barcodes dient im Falle des Standes der Technik ein Barcodeleser, der nahe der Stanzstation angeordnet ist und mittels dessen die Barcodes an den in der Werkzeugaufnahme der Stanzstation gehaltenen Stempeln abgelesen werden können. Eine Erfassung der Barcodes an den Stempeln der vorbekannten Revolverstanze gestaltet sich aufgrund der beengten räumlichen Verhältnisse im Bereich der Stanzstation verhältnismäßig schwierig und setzt zudem notwendigerweise eine definierte, die Positionierung des Barcodelesers berücksichtigende Anordnung der Stempel in der Werkzeugaufnahme der Maschine voraus.

Gattungsgemäßer Stand der Technik ist weiterhin bekannt aus JP-A-01 034629. Dieser Druckschrift ist ein Werkzeug zu entnehmen, das an einem Adapteransatz einen rahmenartigen Sitz aufweist. Der rahmenartige Sitz dient zum Anbringen einer Kennung.

EP-A-0 737 541 offenbart eine vollautomatische Werkzeugmaschine, deren Werkzeuge bzw. Werkzeugteile mit Kennungen versehen sind.

Die Werkzeug- bzw. Werkzeugteilidentifizierung zu erleichtern, hat sich die Erfindung ausgehend von dem gattungsgemäßen Stand der Technik zum Ziel gesetzt.

Vorrichtungsbezogen wird diese Aufgabe erfindungsgemäß gelöst mittels eines Systems der eingangs genannten Art, im Falle dessen die Kennungen der Werkzeuge bzw. Werkzeugteile an den zugeordneten Werkzeugen bzw. Werkzeugteilen lösbar anordenbar und in der Erfassungsposition von den zugeordneten Werkzeugen bzw. Werkzeugteilen gelöst sind. Die verfahrensbezogene Problemlösung besteht erfindungsgemäß darin, dass die den Werkzeugen bzw. Werkzeugteilen zugeordneten Kennungen von den betreffenden Werkzeugen bzw.

Werkzeugteilen abgenommen und anschließend erfasst werden. Eine besondere Vereinfachung der Werkzeug- bzw. Werkzeugteilidentifizierung bewirken die erfindungsgemäßen Merkmale beispielsweise im Falle von Werkzeugteilen, die wie etwa Matrizen von Stanzwerkzeugen in Einbaulage an der Bearbeitungsstation nicht oder nur unter größten Schwierigkeiten mit einer Erfassungseinrichtung erreicht werden können. Die im Sinne der Erfindung vorgesehene Trennbarkeit von Kennungen und zugeordneten Werkzeugen bzw. Werkzeugteilen eröffnet außerdem die Möglichkeit, die Kennungen während des Maschinenbetriebes aus dem unmittelbaren Nahbereich der Bearbeitungsstelle fernzuhalten, wo die Kennungen unvermeidbar schädlichen Einflüssen, beispielsweise Verschmutzungen und mechanischen Beanspruchungen ausgesetzt wären. Auch gestattet es die Erfindung, solchen Werkzeugen und Werkzeugteilen ihre Identifizierung erlaubende Kennungen zuzuordnen, die aufgrund ihrer geringen Abmessungen keinen hinreichenden Platz für fest aufgebrachte Kennungen bieten. Beispielhaft genannt seien in diesem Zusammenhang Stanznadeln. Bereits vorhandene Werkzeuge und Werkzeugteile lassen sich ohne weiteres mit Kennungen der erfindungsgemäßen Art nachrüsten. Das erfindungsgemäße System kann folglich ohne weiteres bereits bestehende weniger effektive Systeme zur Werkzeug- bzw. Werkzeugteilidentifizierung und/oder -verwaltung ersetzen.

Bevorzugte Ausführungsformen des erfindungsgemäßen Systems sind in den abhängigen Ansprüchen 2 bis 19 beschrieben; bevorzugte Varianten des erfindungsgemäßen Verfahrens ergeben sich aus den abhängigen Ansprüchen 21 bis 23.

Anspruch 2 betrifft eine einfache Möglichkeit zur Gestaltung der Kennungen der Werkzeuge bzw. Werkzeugteile. So können beispielsweise papierne Klebeetiketten mit Barcodes vor Ort von dem Maschinenbetreiber selbst und abgestimmt auf die vorhandene Werkzeugverwaltung erstellt werden. Anstelle der genannten Etiketten lassen sich beispielsweise auch mit dem betreffenden Werkzeug oder Werkzeugteil verschraubte und/oder an letzterem über eine Klipsverbindung festlegbare Kennungen verwenden. Als Informationsträger geeignet sind außer Barcodes etwa auch Mikrochips.

Die erfindungsgemäß vorgesehene Verwendung von Kennungen mit separaten Halteteilen (abhängiger Anspruch 3) bedingt vorteilhafterweise eine große Flexibilität des gesamten Systems. So lassen sich mit ein und demselben Halteteil wechselnde Kennungen kombinieren. Eine besonders einfache Halteteilbauart ergibt sich aus dem abhängigen Anspruch 4.

Im Falle des erfindungsgemäßen Systems gemäß Anspruch 5 lassen sich die Kennungen mittels der zugeordneten Halterungen werkzeug- bzw. werkzeugteilnah und dennoch für die Erfassung gut zugänglich anordnen. Als Halterungen kommen beispielsweise Werkzeugkassetten oder Werkzeugaufnahmen von Bearbeitungsstationen in Frage.

Gemäß Anspruch 6 besteht die Möglichkeit zur Identifizierung von Werkzeugen bzw. Werkzeugteilen in Verbindung mit den Halterungen, in welchen die Werkzeuge bzw. Werkzeugteile angeordnet sind. Diese Variante des erfindungsgemäßen Systems stellt insbesondere ab auf Anwendungsfälle, in denen eine Mehrzahl von Halterungen mit wechselnden Werkzeugen bzw. Werkzeugteilen bestückt bzw. im bestückten Zustand vorgehalten wird. Auch im Interesse einer effektiven, insbesondere zentralen Werkzeugverwaltung lässt sich jederzeit feststellen, welche Werkzeuge bzw. Werkzeugteile in welchen Halterungen zu finden sind.

Auch die Kennungen der Halterungen können erfindungsgemäß vielfältiger Art sein. So können die Kennungen der Halterungen beispielsweise in deren räumlicher Anordnung in einem Magazin bestehen. Etwa im Fälle einer automatisierten Halterungsentnahme kann die genannte räumliche Anordnung über die beispielsweise von einem Greifer bei der Entnahme der jeweiligen Halterung aus dem betreffenden Magazin ausgeführte Bewegung definiert werden.

In bevorzugter Ausgestaltung des erfindungsgemäßen Systems sind die Kennungen der Halterungen an letzteren vorgesehen. Vorzugsweise sind dabei auch die Kennungen der Halterungen an letzteren lösbar angebracht. Diese Maßnahme bietet eine einfache Möglichkeit, auch die Kennungen der Halterungen erforderlichenfalls auszutauschen bzw. an die Erfordernisse des jeweiligen Anwendungsfalles anzupassen.

Eine definierte Anordnung bzw. Ausrichtung der Kennungen der Werkzeuge bzw. Werkzeugteile und/oder der Halterungen an der oder den Halterungen erleichtert insbesondere die automatisierte Erfassung der Kennungen durch die hierfür vorgesehene Erfassungseinrichtung. Besonders einfache und effektive Möglichkeiten zur Realisierung einer definierten Anordnung bzw. Ausrichtung der Kennungen sind in den abhängigen Ansprüchen 12 und 13 beschrieben.

Für den Fall, dass Kennungen etwa nach einem unkontrollierten Lösen den betreffenden Werkzeugen bzw. Werkzeugteilen und/oder den betreffenden Halterungen nicht mehr ohne weiteres zuordenbar sind, ist gemäß Anspruch 15 dadurch Vorsorge getroffen, dass die Werkzeuge bzw. Werkzeugteile und/oder die betreffenden Halterungen des in dem genannten Anspruch beschriebenen erfindungsgemäßen Systems neben den lösbar an ihnen anordenbaren Kennungen unlösbar an ihnen angebrachte Kennungen gleichen Inhaltes aufweisen. Aufgrund dieses Merkmales ist es möglich, beispielsweise in Unordnung geratene Kennungen den zugehörigen Werkzeugen bzw. Werkzeugteilen und/oder den zugehörigen Halterungen wieder eindeutig zuzuordnen. Im Interesse einer möglichst einfachen Gestaltung des erfindungsgemäßen Gesamtsystems ist die in dem abhängigen Anspruch 16 beschriebene Maßnahme, wonach ein und dieselbe Erfassungseinrichtung sowohl zur Erfassung der Kennungen der Halterungen als auch zur Erfassung der Kennungen der Werkzeuge bzw. Werkzeugteile genutzt wird.

Ausweislich des abhängigen Anspruchs 17 ist das erfindungsgemäße System zur Identifizierung von Werkzeugen und/oder Werkzeugteilen in die Rechnersteuerung der betreffenden Werkzeugmaschine integriert. Diese Integration bietet für den Betrieb der Werkzeugmaschine insbesondere dann eine Vielzahl von Vorteilen, wenn in der Rechnersteuerung der Werkzeugmaschine Informationen zu den erfassten Werkzeugen bzw. Werkzeugteilen und/oder zu den erfassten Halterungen hinterlegt und diese Informationen dann auch noch veränderbar sind (abhängige Ansprüche 18, 19). Sind beispielsweise in der Rechnersteuerung einer Stanzmaschine an Informationen zu den an der Bearbeitungsstation der Maschine ein- und auswechselbaren Stempeln und Matrizen die Stempeldurchmesser sowie die Durchmesser der Matrizenöffnungen hinterlegt, so kann nach der Erfassung der Kennungen von zum gemeinsamen Einbau in die Bearbeitungsstation vorgesehenen Stempeln und Matrizen mittels der Rechnersteuerung der Werkzeugmaschine überprüft werden, ob die zur Kombination miteinander vorgesehenen Werkzeugteile auch tatsächlich miteinander kombinierbar sind. Es ergibt sich so eine hohe Rüstsicherheit. Zudem kann vorgesehen sein, dass eine Werkstückbearbeitung von der Rechnersteuerung der Maschine nur unter der Voraussetzung in Gang gesetzt wird, dass der identifizierte Stempel aufgrund seines Durchmessers kompatibel ist mit der identifizierten Matrize.

Die Vorteile der in den abhängigen Ansprüchen 21 bis 23 beschriebenen Varianten des erfindungsgemäßen Verfahrens ergeben sich analog aus den vorstehenden Ausführungen zu dem erfindungsgemäßen System.

Nachstehend wird die Erfindung anhand beispielhafter schematischer Darstellungen näher erläutert. Es zeigen:
- Figur 1: eine Zusammenstellung von Werkzeugteilen eines Stanzwerkzeuges,
- Figur 2: eine Prinzipdarstellung einer als Werkzeugkassette ausgebildeten Halterung mit den stilisiert dargestellten Werkzeugteilen gemäß Figur 1 in der Seitenansicht,
- Figur 3: eine Detaildarstellung der Werkzeugkassette mit Werkzeugteilen gemäß Figur 2 in der perspektivischen Draufsicht und
- Figur 4: eine Stanzmaschine mit einer Mehrzahl von Werkzeugkassetten mit Werkzeugteilen der in den Figuren 2 und 3 gezeigten Art.

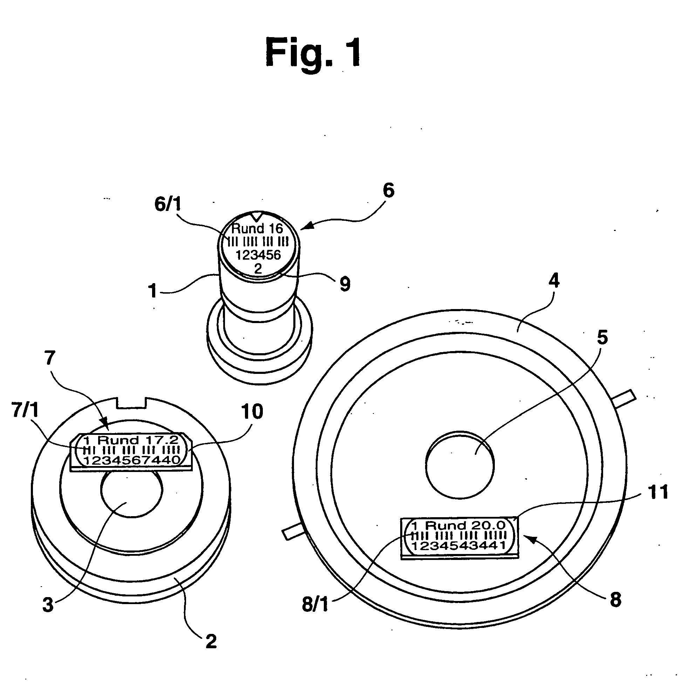

Ausweislich Figur 1 umfasst ein herkömmliches Stanzwerkzeug als Werkzeugteile wie üblich einen Stempel 1, eine Matrize 2 mit Matrizenöffnung 3 sowie einen Abstreifer 4 mit Abstreiferöffnung 5. Der Stempel 1 ist mit einer Kennung 6, die Matrize 2 mit einer Kennung 7 und der Abstreifer 4 mit einer Kennung 8 versehen.

Die Kennungen 6, 7, 8 sind als Klebeetiketten ausgebildet mit aufgedruckten Barcodes 6/1, 7/1, 8/1 sowie unverschlüsselten Angaben. Unverschlüsselt angegeben sind dabei die Identifizierungsnummern ("123456", "1234567440", "1234567441") von Stempel 1, Matrize 2 und Abstreifer 4, die Querschnittsform ("Rund") und der Durchmesser ("16", "17,2", "20,0") von Stempel 1, Matrizenöffnung 3 und Abstreiferöffnung 5 sowie die sogenannten "Duplo-Nummern" ("2", "1", "1"). "Duplo-Nummern" werden vergeben, wenn Werkzeugteile mehrfach vorgehalten werden. Mit "Duplo-Nummern" werden dann die gleichartigen Werkzeugteile durchnummeriert. In Figur 1 dargestellt ist beispielsweise der zweite Rundstempel des betreffenden Werkzeugteilevorrats mit dem Durchmesser 16 mm. Variieren können gleichartige, mit "Duplo-Nummern" versehene Stempel hinsichtlich ihrer Nachschleiflängen. Die Barcodes 6/1, 7/1, 8/1 geben in verschlüsselter Form die unverschlüsselten Identifizierungsnummern der einzelnen Werkzeugteile wieder.

Mittels Haltemagneten 9, 10, 11, auf welche sie aufgeklebt sind, sind die Kennungen 6, 7, 8 lösbar an dem Stempel 1, der Matrize 2 und dem Abstreifer 4 angebracht. Mit den daran gehaltenen Kennungen 6, 7, 8 werden der Stempel 1, die Matrize 2 und der Abstreifer 4 vor und nach den mit ihnen durchgeführten Werkstückbearbeitungen gemeinsam mit weiteren, ebenfalls mit entsprechenden Kennungen versehenen Werkzeugteilen in einem Werkzeugteilemagazin, beispielsweise einem Werkzeugschrank, vorgehalten. Neben den lösbaren Kennungen 6, 7, 8 weisen der Stempel 1, die Matrize 2 und der Abstreifer 4 im Einzelnen nicht dargestellte, in die genannten Werkzeugteile eingeprägte Kennungen gleichen Inhaltes auf.

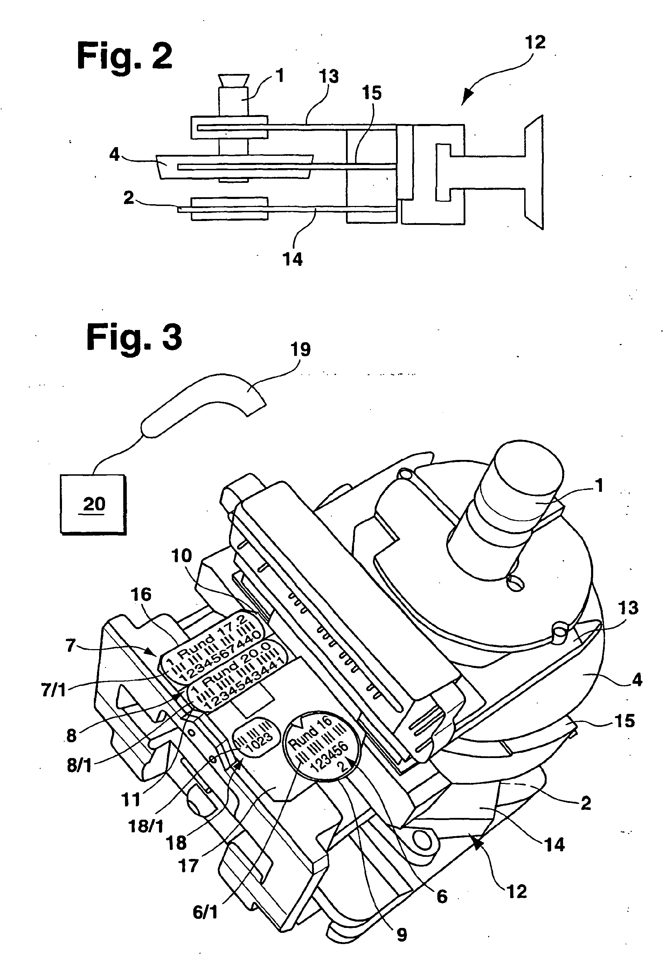

Zur Vorbereitung ihres Einsatzes, d.h. beim Rüsten der betreffenden Werkzeugmaschine, werden der Stempel 1, die Matrize 2 und der Abstreifer 4 mit den daran angebrachten Kennungen 6, 7, 8 dem Werkzeugteilemagazin entnommen und anschließend in eine Halterung in Form einer Werkzeugkassette 12 eingesetzt, wie sie im einzelnen den Figuren 2 und 3 zu entnehmen ist. Die insoweit herkömmliche Werkzeugkassette 12 besitzt Haltearme 13, 14, 15 zur Lagerung des Stempels 1, der Matrize 2 sowie des Abstreifers 4.

Vor dem Einsetzen des Stempels 1, der Matrize 2 sowie des Abstreifers 4 in hierfür vorgesehene Aufnahmen an den Haltearmen 13, 14, 15 werden die Kennungen 6, 7, 8 von den zugeordneten Werkzeugteilen abgenommen und in der aus Figur 3 ersichtlichen Art und Weise an der Werkzeugkassette 12 angeordnet. Formschlüssige Passungen sorgen dabei für eine definierte Anordnung und Ausrichtung der Kennungen 6, 7, 8 an der Werkzeugkassette 12. Zu diesem Zweck ist die Innenkontur einer Vertiefung 16 der Werkzeugkassette 12 auf die Außenkonturen der Haltemagnete 10, 11 der Kennungen 7, 8 sowie auf die Außenkontur eines Haltemagneten 17 für eine ebenfalls als Klebeetikett ausgebildete Kennung 18 der Werkzeugkassette 12 abgestimmt. Der Haltemagnet 17 besitzt seinerseits eine Innenkontur, in welche der Haltemagnet 9 der Kennung 6 eingepaßt ist.

Die Kennung 18 der Werkzeugkassette 12 umfasst einen Barcode 18/1 sowie die unverschlüsselte Angabe "1023". Bei letzterer handelt es sich um die Nummer des Stellplatzes der Werkzeugkassette 12 in einem Werkzeugkassettenmagazin. Der Barcode 18/1 gibt die genannte Stellplatznummer in verschlüsselter Form wieder.

Ist die Werkzeugkassette 12 in der in Figur 3 gezeigten Art und Weise mit dem Stempel 1, der Matrize 2 sowie dem Abstreifer 4 bestückt und mit den Kennungen 6, 7, 8, 18 versehen, so können die Kennungen 6, 7, 8, 18, im einzelnen deren Barcodes 6/1, 7/1, 8/1, 18/1 mittels eines manuellen Barcodelesers 19 erfasst werden. Der Barcodeleser bildet ebenso wie die genannten Kennungen 6, 7, 8, 18 einen Teil eines Systems zur Identifizierung von Stempel 1, Matrize 2 und Abstreifer 4. Mit den genannten Barcodes erfasst werden die Identifizierungsnummern von Stempel 1, Matrize 2 und Abstreifer 4 sowie die Nummer des Stellplatzes der Werkzeugkassette 12 in einem Werkzeugkassettenmagazin.

Der Barcodeleser 19 ist an einem Rüstplatz angeordnet und mit einer Rechnereinheit 20 verbunden. Diese dient zum einen als Auswerteeinrichtung, mittels derer die erfassten Kennungen 6, 7, 8 von Stempel 1, Matrize 2 und Abstreifer 4 der erfassten Kennung 18 der Werkzeugkassette 12 zugeordnet werden. Die erfassten Daten sowie die sich ergebenden Zuordnungen werden gespeichert und sind abrufbar. Für den Bedienungsmann feststellbar ist dementsprechend, welche Werkzeugteile in der Werkzeugkassette 12 angeordnet sind. Entsprechend kann der Inhalt weiterer Werkzeugkassetten desselben Werkzeugteile- bzw. Werkzeugkassettenvorrates kassettenbezogen identifiziert werden.

Darüber hinaus hat die Rechnereinheit 20 Zugriff auf gespeicherte Informationen zu den Werkzeugteilen mit den erfassten Identifizierungsnummern, gemäß Figur 3 auf Informationen zu dem Stempel 1, der Matrize 2 und dem Abstreifer 4. An relevanten Informationen verfügbar sind u.a. Daten, die für die Kombinierbarkeit der in der Werkzeugkassette 12 untergebrachten Werkzeugteile ausschlaggebend sind. Hierzu zählen beispielsweise Informationen zu Querschnittsform und Durchmesser des Stempels 1, der Matrizenöffnung 3 und der Abstreiferöffnung 5. Insoweit kann der Bedienungsmann beim Bestücken der Werkzeugkassette 12 anhand der unverschlüsselten Angaben der Kennungen 6, 7, 8 auch unmittelbar eine Sichtkontrolle durchführen. Ergibt sich bei der mittels der Rechnereinheit 20 durchgeführten Überprüfung der zum Einsetzen in ein und dieselbe Werkzeugkassette 12 vorgesehenen bzw. der bereits in der Werkzeugkassette 12 angeordneten Werkzeugteile, dass einzelne Werkzeugteile nicht miteinander kompatibel sind, so generiert die Rechnereinheit 20 eine Fehlermeldung, aufgrund derer der Bedienungsmann dann eine entsprechende Korrektur bei der Zusammenstellung der Werkzeugteile vornehmen kann.

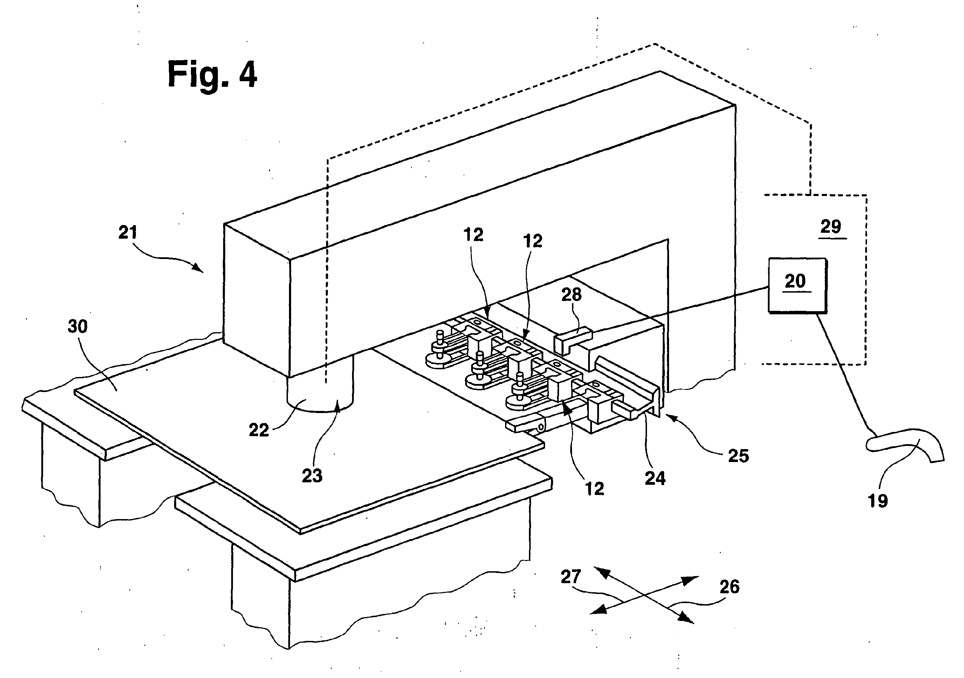

Bei komplexen Werkstückbearbeitungen, wie sie etwa mit einer Werkzeugmaschine in Form einer Stanzmaschine 21 der in Figur 4 gezeigten Art an einem Blech 30 durchgeführt werden, sind im Laufe des Bearbeitungsvorganges nacheinander unterschiedliche Stanzwerkzeuge zu verwenden. Diese werden zu diesem Zweck bekanntermaßen (s. z.B. DE-A-38 18 001) in einer vorgegebenen Reihenfolge nacheinander in eine Werkzeughalterung 22 an einer Stanzstation 23 der Stanzmaschine 21 eingewechselt. Im Nahbereich der Stanzstation 23 werden die Stanzwerkzeuge, die jeweils einen Stempel, eine Matrize sowie einen Abstreifer umfassen, in Werkzeugkassetten nach Art der Werkzeugkassette 12 gemäß den Figuren 2 und 3 vorgehalten. Die Werkzeugkassetten 12 werden, nachdem sie in der vorstehend beschriebenen Art und Weise mit Stempel, Matrize und Abstreifer bestückt und zusätzlich zu ihrer eigenen Kennung mit den Kennungen der jeweiligen Werkzeugteile versehen worden sind, von dem Bedienungsmann in einem sogenannten "Linearmagazin" an einer Schiene 24 einer Koordinatenführung 25 der Stanzmaschine 21 angebracht. In bekannter Weise ist die Schiene 24 mit den daran gehaltenen Werkzeugkassetten 12 in einer horizontalen Ebene in Richtung von Doppelpfeilen 26, 27 verfahrbar. Mit entsprechenden Verfahrbewegungen der Schiene 24 bzw. der Koordinatenführung 25 werden die in den einzelnen Werkzeugkassetten 12 untergebrachten Stanzwerkzeuge an der Werkzeughalterung 22 der Stanzstation 23 automatisiert ein- und ausgewechselt.

Nach dem Rüsten des Linearmagazins an der Schiene 24 mit den bestückten Werkzeugkassetten 12 werden die an letzteren angeordneten Kennungen der jeweiligen Werkzeugteile sowie der jeweiligen Werkzeugkassette 12 mittels einer Erfassungseinrichtung in Form eines Barcodelesers 28 erfasst. Zu diesem Zweck werden die Werkzeugkassetten 12 des Linearmagazins mit den Kennungen durch Verfahren der Schiene 24 an dem stationären Barcodeleser 28 entlang bewegt. Letzterer ist ebenso wie der Barcodeleser 19 mit der Rechnereinheit 20 verbunden und Teil des Systems zur Werkzeugteilidentifizierung an der Stanzmaschine 21. Alternativ zu den dargestellten Verhältnissen könnte der Barcodeleser 28 auch an einem von der Stanzmaschine 21 getrennten Ständer angebracht und auf diese Art und Weise vor einer Beeinträchtigung durch Erschütterungen geschützt sein, wie sie während der Werkstückbearbeitung auftreten. Auch ist es möglich, den Barcodeleser 28 in Richtung des Doppelpfeils 26 an den Werkzeugkassetten 12 bzw. an den daran angebrachten Kennungen entlang zu bewegen. Diese Bewegung kann manuell oder maschinell ausgeführt werden.

Nachdem die Kennungen der in den Werkzeugkassetten 12 angeordneten Werkzeugteile beim Rüsten der Werkzeugkassetten 12 an diesen sowie die Werkzeugkassetten 12 selbst definiert angeordnet und ausgerichtet worden sind, lassen sich die Kennungen der Werkzeugteile ohne weiteres mit dem Barcodeleser 28 erfassen. Entsprechendes gilt für die definiert angeordneten und ausgerichteten Kennungen der Werkzeugkassetten 12. Auch die mit dem Barcodeleser 28 erfassten Kennungen der Werkzeugteile einerseits sowie der Werkzeugkassetten 12 andererseits werden mittels der Rechnereinheit 20 einander zugeordnet. Auch aufgrund der mit dem Barcodeleser 28 erfassten Kennungen kann festgestellt werden, welche Werkzeugteile in welcher der Werkzeugkassetten 12 untergebracht sind und/oder ob die in ein und derselben Werkzeugkassette 12 angeordneten Werkzeugteile miteinander kompatibel sind. Sind zudem die Lagerplätze der einzelnen Werkzeugkassetten 12 in dem Linearmagazin an der Schiene 24 definiert, so lässt sich außerdem ermitteln, welche Werkzeugteile sich an welchem Lagerplatz des Linearmagazins befinden.

Die Rechnereinheit 20 sowie die vorstehend im einzelnen beschriebenen Komponenten des Systems zur Identifizierung von Werkzeugteilen sind Elemente einer Rechnersteuerung 29 der Werkzeugmaschine 21. Die mittels des Barcodelesers 19 und/oder mittels des Barcodelesers 28 erfassten Kennungen lassen sich daher für die Steuerung der Stanzmaschine 21 nutzen. Wird etwa mittels der Rechnereinheit 20 festgestellt, dass in einer der Werkzeugkassetten an der Schiene 24 Werkzeugteile angeordnet sind, die nicht miteinander kompatibel sind und deren gemeinsame Verwendung zu einer Störung des Bearbeitungsvorgangs führen würde, so kann ein Steuersignal erzeugt werden, aufgrund dessen der noch stillgesetzte Antrieb der Stanzmaschine 21 gegen Inbetriebnahme gesperrt wird. Auch besteht die Möglichkeit, auf der Grundlage der über den Barcodeleser 19 und/oder den Barcodeleser 28 erfassten Kennungen Parameter für den Betrieb der Stanzmaschine 21 vorzugeben. Hat die Rechnereinheit 20 beispielsweise Zugriff auf Angaben zu den Nachschleiflängen der in den einzelnen Werkzeugkassetten 12 angeordneten Stempel, so können den über den Barcodeleser 19 und/oder den Barcodeleser 28 erfassten Stempelkennungen durch die Rechnereinheit 20 zunächst die Nachschleiflängen der jeweiligen Stempel zugeordnet werden. Ausgehend von den Nachschleiflängen wird dann die Länge der Hübe ermittelt, die von der Werkzeughalterung 22 an der Stanzstation 23 der Stanzmaschine 21 auszuführen sind, damit die einzelnen Stempel mit der zur Erstellung der gewünschten Ausstanzungen benötigten Tiefe in die jeweils zugeordneten Matrizen eindringen. In Abhängigkeit von den ermittelten Stempel-Eindringtiefen bzw. Stempelhüben wird dann der Antrieb der Werkzeughalterung 22 die Stanzmaschine 21 gesteuert. Die für die Rechnereinheit 20 verfügbaren Informationen zu den Werkzeugteilen bzw. Werkzeugkassetten 12 sind veränderbar, insbesondere aktualisierbar.

Dadurch dass die Lagerplätze der Werkzeugkassetten 12 in dem Linearmagazin an der Schiene 24 definiert sind und nachdem die Belegung der genannten Lagerplätze mittels des Barcodelesers 28 erfasst wurde, ist auch bekannt, welche Werkzeugteile sich an welcher Stelle in dem Linearmagazin befinden. Anhand der mittels des Barcodelesers 19 oder mittels des Barcodelesers 28 erfassten und von der Rechnereinheit 20 ausgewerteten Informationen kann somit diejenige Verfahrbewegung der Koordinatenführung 25 bzw. der Schiene 24 definiert werden, die ausgeführt werden muss, damit der Werkzeughalterung 22 der Stanzmaschine 21 in der für die Erzielung des gewünschten Bearbeitungsergebnisses erforderlichen Reihenfolge die einzelnen Stanzwerkzeuge zugeführt werden. Von der Rechnersteuerung 29 wird der Verfahrantrieb der Koordinatenführung 25 dann entsprechend angesteuert. Beim vorausgehenden Rüsten des Linearmagazins an der Schiene 24 können die bestückten Werkzeugkassetten 12 beliebig an den zur Verfügung stehenden, definierten Lagerplätzen angeordnet werden.

## Patentansprüche

1. System zur Identifizierung von Werkzeugen und/oder Werkzeugteilen (1, 2, 4) von Werkzeugmaschinen, insbesondere von Stanzmaschinen (21), umfassend wenigstens eine Kennung (6, 7, 8) für Werkzeuge bzw. wenigstens eine Kennung (6, 7, 8) für Werkzeugteile (1, 2, 4) sowie eine Erfassungseinrichtung (19, 28), für welche die Kennungen (6, 7, 8) in einer Erfassungsposition zugänglich sind und mittels derer die Kennungen (6, 7, 8) in der Erfassungsposition erfasst werden, **dadurch gekennzeichnet, dass** die Kennungen (6, 7, 8) der Werkzeuge bzw. Werkzeugteile (1, 2, 4) an den zugeordneten Werkzeugen bzw. Werkzeugteilen (1, 2, 4) lösbar anordenbar und in der Erfassungsposition von den zugeordneten Werkzeugen bzw. Werkzeugteilen (1, 2, 4) gelöst sind.

2. System nach Anspruch 1, **dadurch gekennzeichnet, dass** die Kennungen (6, 7, 8) der Werkzeuge bzw. Werkzeugteile (1, 2, 4) als austauschbare Etiketten, insbesondere als Klebeetiketten, ausgebildet sind.

3. System nach einem der vorhergehenden Ansprüche, **dadurch gekennzeichnet, dass** die Kennungen (6, 7, 8) der Werkzeuge bzw. Werkzeugteile (1, 2, 4) jeweils über einen sie lösbar lagernden Halteteil an den zugeordneten Werkzeugen bzw. Werkzeugteilen (1, 2, 4) anbringbar bzw, angebracht sind.

4. System nach einem der vorhergehenden Ansprüche, wobei die Werkzeuge bzw. Werkzeugteile (1, 2, 4) zumindest teilweise magnetisch sind, **dadurch gekennzeichnet, dass** die Halteteile für die Kennungen (6, 7, 8) der Werkzeuge bzw. Werkzeugteile (1, 2, 4) als Haltemagneten (9, 10, 11) ausgebildet sind oder einen solchen aufweisen.

5. System nach einem der vorhergehenden Ansprüche, wobei Werkzeuge bzw. Werkzeugteile (1, 2, 4), denen Kennungen (6, 7, 8) zugeordnet sind, in wenigstens einer Halterung (12) anordenbar sind, **dadurch gekennzeichnet, dass** die Kennungen (6, 7, 8) der Werkzeuge bzw. Werkzeugteile (1, 2, 4) wahlweise an den zugeordneten Werkzeugen bzw. Werkzeugteilen (1, 2, 4) oder an der oder den zugeordneten Halterungen (12) lösbar anordenbar und bei Anordnung an der oder den betreffenden Halterungen (12) für die Erfassungseinrichtung (19, 28) zur Erfassung zugänglich sind.

6. System nach einem der vorhergehenden Ansprüche, **dadurch gekennzeichnet, dass** eine Mehrzahl von Halterungen (12) vorgesehen ist, in denen Werkzeuge bzw. Werkzeugteile (1, 2, 4) anordenbar sind, dass jeder der Halterungen (12) eine mittels einer Erfassungseinrichtung (19, 28) erfassbare Kennung (18) zugeordnet ist und dass eine Auswerteeinrichtung (20) vorgesehen ist, mittels derer die erfassten Kennungen (6, 7, 8) der Werkzeuge bzw. Werkzeugteile (1, 2, 4) und die erfassten Kennungen (18) der Halterungen (12) einander zuordenbar sind.

7. System nach einem der vorhergehenden Ansprüche, **dadurch gekennzeichnet, dass** als Kennungen der Halterungen (12) deren jeweilige räumliche Anordnung in einem Magazin vorgesehen sind.

8. System nach einem der vorhergehenden Ansprüche, **dadurch gekennzeichnet, dass** die Kennungen (18) der Halterungen (12) an letzteren vorgesehen sind.

9. System nach einem der vorhergehenden Ansprüche, **dadurch gekennzeichnet, dass** die Kennungen (18) der Halterungen (12) an letzteren lösbar angebracht sind.

10. System nach einem der vorhergehenden Ansprüche, **dadurch gekennzeichnet, dass** die Kennungen (6, 7, 8) der Werkzeuge bzw. Werkzeugteile (1, 2, 4) und/oder die Kennungen (18) der Halterungen (12) an einer definierten Stelle der betreffenden Halterung (12) anordenbar bzw. angeordnet sind.

11. System nach einem der vorhergehenden Ansprüche, **dadurch gekennzeichnet, dass** die Kennungen (6, 7, 8) der Werkzeuge bzw. Werkzeugteile (1, 2, 4) und/oder die Kennungen (18) der Halterungen (12) mit definierter Ausrichtung an der betreffenden Halterung (12) anordenbar bzw. angeordnet sind.

12. System nach einem der vorhergehenden Ansprüche, **dadurch gekennzeichnet, dass** die Kennungen (6, 7, 8) der Werkzeuge bzw. Werkzeugteile (1, 2, 4) und/oder die Kennungen (18) der Halterungen (12) mittels formschlüssiger Passungen an einer definierten Stelle und/oder mit definierter Ausrichtung an der betreffenden Halterung (12) anordenbar bzw. angeordnet sind.

13. System nach einem der vorhergehenden Ansprüche, **dadurch gekennzeichnet, dass** die formschlüssigen Passungen zur Anordnung der Kennungen (6, 7, 8) der Werkzeuge bzw. Werkzeugteile (1, 2, 4) und/oder der Kennungen (18) der Halterungen (12) gebildet werden von ineinanderpassenden Innen- und Außenkonturen an der betreffenden Halterung (12) sowie an den Kennungen (6, 7, 8, 18).

14. System nach einem der vorhergehenden Ansprüche, **dadurch gekennzeichnet, dass** Kennungen (18) der Halterungen (12) Merkmale aufweisen, welche den Merkmalen der Kennungen (6, 7, 8) der Werkzeuge bzw. Werkzeugteile (1, 2, 4) gemäß wenigstens einem der Ansprüche 2 bis 4 entsprechen.

15. System nach einem der vorhergehenden Ansprüche, **dadurch gekennzeichnet, dass** die Werkzeuge bzw. Werkzeugteile (1, 2, 4) und/oder die betreffenden Halterungen (12) neben den lösbar an ihnen anordenbaren Kennungen (6, 7, 8, 18) unlösbar an ihnen angebrachte Kennungen gleichen Inhaltes aufweisen.

16. System nach einem der vorhergehenden Ansprüche, **dadurch gekennzeichnet, dass** als Erfassungseinrichtung (19, 28) zur Erfassung der Kennungen (18) der Halterungen (12) die Erfassungseinrichtung (19, 28) zur Erfassung der Kennungen (6, 7, 8) der Werkzeuge bzw. Werkzeugteile (1, 2, 4) vorgesehen ist.

17. System nach einem der vorhergehenden Ansprüche, **dadurch gekennzeichnet, dass** es einen Teil einer Rechnersteuerung (29) der Werkzeugmaschine (21) bildet, wobei die Erfassungseinrichtung (19, 28) zur Erfassung der Kennungen (6, 7, 8) der Werkzeuge bzw. Werkzeugteile (1, 2, 4) und/oder die Erfassungseinrichtung (19, 28) zur Erfassung der Kennungen (18) der Halterungen (12) mit einer Rechnereinheit (30) der Rechnersteuerung (29) der Werkzeugmaschine (21) in Verbindung steht.

18. System nach einem der vorhergehenden Ansprüche, **dadurch gekennzeichnet, dass** in der Rechnersteuerung (29) der Werkzeugmaschine (21) Informationen zu den den erfassten Kennungen (6, 7, 8) zugeordneten Werkzeugen bzw. Werkzeugteilen (1, 2, 4) und/oder zu den den erfassten Kennungen (18) zugeordneten Halterungen (12) hinterlegt sind.

19. System nach einem der vorhergehenden Ansprüche, **dadurch gekennzeichnet, dass** die in der Rechnersteuerung (29) der Werkzeugmaschine (21) hinterlegten Informationen zu den den erfassten Kennungen (6, 7, 8) zugeordneten Werkzeugen bzw. Werkzeugteilen (1, 2, 4) und/oder die entsprechenden Informationen zu den den erfassten Kennungen (18) zugeordneten Halterungen (12) veränderbar sind.

20. Verfahren zur Identifizierung von Werkzeugen bzw. Werkzeugteilen (1, 2, 4) von Werkzeugmaschinen, insbesondere Stanzmaschinen (21), durchgeführt mit einem System gemäß einem der vorhergehenden Ansprüche, **dadurch gekennzeichnet, dass** die den Werkzeugen bzw. den Werkzeugteilen (1, 2, 4) zugeordneten Kennungen (6, 7, 8) von den betreffenden Werkzeugen bzw. Werkzeugteilen (1, 2, 4) abgenommen und anschließend erfasst werden.

21. Verfahren nach Anspruch 20, wobei Werkzeuge bzw. Werkzeugteile (1, 2, 4), denen Kennungen (6, 7, 8) zugeordnet sind, in wenigstens einer Halterung (12) anordenbar sind, **dadurch gekennzeichnet, dass** die von den betreffenden Werkzeugen bzw. Werkzeugteilen (1, 2, 4) abgenommenen Kennungen (6, 7, 8) an der oder den Halterungen (12) angeordnet werden, in welchen die Werkzeuge bzw. Werkzeugteile (1, 2, 4) angeordnet sind bzw. werden und dass anschließend die an der oder den betreffenden Halterungen (12) angeordneten Kennungen (6, 7, 8) der Werkzeuge bzw. Werkzeugteile (1, 2, 4) erfasst werden.

22. Verfahren nach Anspruch 20 oder 21, wobei eine Mehrzahl von Halterungen (12) verwendet wird, denen jeweils eine eigene Kennung (18) zugeordnet ist, **dadurch gekennzeichnet, dass** neben den Kennungen (6, 7, 8) der Werkzeuge bzw. Werkzeugteile (1, 2, 4) auch die Kennungen (18) der Halterungen (12) erfasst werden und dass die erfassten Kennungen (6, 7, 8) der Werkzeuge bzw. Werkzeugteile (1, 2, 4) und die erfassten Kennungen (18) der Halterungen (12) einander zugeordnet werden.

23. Verfahren nach einem der Ansprüche 20 bis 22, **dadurch gekennzeichnet, dass** es Teil eines Verfahrens zur Steuerung der Werkzeugmaschine (21) ist, wobei den erfassten Kennungen (6, 7, 8) der Werkzeuge bzw. Werkzeugteile (1, 2, 4) und/oder den erfassten Kennungen (18) der Halterungen (12) die Werkzeuge bzw. Werkzeugteile (1, 2, 4) bzw. die Halterungen (12) betreffende Informationen zugeordnet und die zugeordneten Informationen ausgewertet werden und dass in Abhängigkeit von dem Auswertungsergebnis die Werkzeugmaschine (21) gesteuert wird.

## Claims

1. System for identifying tools and/or tool parts (1, 2, 4) of machine tools, especially of punching machines (21), comprising at least one identifier (6, 7, 8) for tools and/or at least one identifier (6, 7, 8) for tool parts (1, 2, 4) and a reading device (19, 28) to which the identifiers (6, 7, 8) are accessible in a reading position and by means of which the identifiers (6, 7, 8) are read in the reading position, **characterised in that** the identifiers (6, 7, 8) of the tools and/or tool parts (1, 2, 4) may be detachably arranged on the associated tools and/or tool parts (1, 2, 4) and are detached from the associated tools and/or tool parts (1, 2, 4) in the reading position.

2. System according to claim 1, **characterised in that** the identifiers (6, 7, 8) of the tools and/or tool parts (1, 2, 4) are in the form of interchangeable labels, especially adhesive labels.

3. System according to one of the preceding claims, **characterised in that** the identifiers (6, 7, 8) of the tools and/or tool parts (1, 2, 4) are each attachable or attached to the associated tools and/or tool parts (1, 2, 4) by means of a holding element that supports them in a detachable manner.

4. System according to any one of the preceding claims, wherein the tools and/or tool parts (1, 2, 4) are at least partly magnetic, **characterised in that** the holding elements for the identifiers (6, 7, 8) of the tools and/or tool parts (1, 2, 4) are in the form of holding magnets (9, 10, 11) or have a holding magnet (9, 10, 11).

5. System according to any one of the preceding claims, wherein tools and/or tool parts (1, 2, 4) with which identifiers (6, 7, 8) are associated may be arranged in at least one holder (12), **characterised in that** the identifiers (6, 7, 8) of the tools and/or tool parts (1, 2, 4) may be detachably arranged either on the associated tools and/or tool parts (1, 2, 4) or on the associated holder(s) (12) and, when arranged on the relevant holder(s) (12), are accessible to the reading device (19, 28) for reading.

6. System according to any one of the preceding claims, **characterised in that** a plurality of holders (12) is provided in which tools and/or tool parts (1, 2, 4) may be arranged, each of the holders (12) has associated with it an identifier (18) readable by means of a reading device (19, 28), and an evaluation device (20) is provided by means of which the read identifiers (6, 7, 8) of the tools and/or tool parts (1, 2, 4) and the read identifiers (18) of the holders (12) may be associated with one another.

7. System according to any one of the preceding claims, **characterised in that** as identifiers of the holders (12) their respective spatial arrangements in a magazine are provided.

8. System according to any one of the preceding claims, **characterised in that** the identifiers (18) of the holders (12) are provided on the latter.

9. System according to any one of the preceding claims, **characterised in that** the identifiers (18) of the holders (12) are detachably arranged on the latter.

10. System according to any one of the preceding claims, **characterised in that** the identifiers (6, 7, 8) of the tools and/or tool parts (1, 2, 4) and/or the identifiers (18) of the holders (12) may be or are arranged at a defined place on the relevant holder (12).

11. System according to any one of the preceding claims, **characterised in that** the identifiers (6, 7, 8) of the tools and/or tool parts (1, 2, 4) and/or the identifiers (18) of the holders (12) may be or are arranged in a defined orientation on the relevant holder (12).

12. System according to any one of the preceding claims, **characterised in that** the identifiers (6, 7, 8) of the tools and/or tool parts (1, 2, 4) and/or the identifiers (18) of the holders (12) may be or are arranged at a defined place and/or in a defined orientation on the relevant holder (12) by means of form-fitting structures.

13. System according to any one of the preceding claims, **characterised in that** the forming-fitting structures for arrangement of the identifiers (6, 7, 8) of the tools and/or tool parts (1, 2, 4) and/or of the identifiers (18) of the holders (12) are formed by inner and outer contours, fitting one into the other, on the relevant holder (12) and on the identifiers (6, 7, 8, 18).

14. System according to any one of the preceding claims, **characterised in that** identifiers (18) of the holders (12) have features that correspond to the features of the identifiers (6, 7, 8) of the tools and/or tool parts (1, 2, 4) according to at least one of claims 2 to 4.

15. System according to any one of the preceding claims, **characterised in that** the tools and/or tool parts (1, 2, 4) and/or the relevant holders (12) have, in addition to the identifiers (6, 7, 8, 18) that may be detachably arranged thereon, identifiers having the same content that are non-detachably provided thereon.

16. System according to any one of the preceding claims, **characterised in that** the reading device (19, 28) for reading the identifiers (6, 7, 8) of the tools and/or tool parts (1, 2, 4) is provided as the reading device (19, 28) for reading the identifiers (18) of the holders (12).

17. System according to any one of the preceding claims, **characterised in that** it forms part of a computer control (29) of the machine tool (21), wherein the reading device (19, 28) for reading the identifiers (6, 7, 8) of the tools and/or tool parts (1, 2, 4) and/or the reading device (19, 28) for reading the identifiers (18) of the holders (12) is/are connected to a computer unit (30) of the computer control (29) of the machine tool (21).

18. System according to any one of the preceding claims, **characterised in that** information on the tools and/or tool parts (1, 2, 4) associated with the read identifiers (6, 7, 8) and/or on the holders (12) associated with the read identifiers (18) is stored in the computer control (29) of the machine tool (21).

19. System according to any one of the preceding claims, **characterised in that** the information on the tools and/or tool parts (1, 2, 4) associated with the read identifiers (6, 7, 8) which is stored in the computer control (29) of the machine tool (21) and/or the corresponding information on the holders (12) associated with the read identifiers (18) may be altered.

20. Method for identifying tools and/or tool parts (1, 2, 4) of machine tools, especially punching machines (21), carried out with a system according to any one of the preceding claims, **characterised in that** the identifiers (6, 7, 8) associated with the tools and/or tool parts (1, 2, 4) are taken off the relevant tools and/or tool parts (1, 2, 4) and then read.

21. Method according to claim 20, wherein tools and/or tool parts (1, 2, 4) with which identifiers (6, 7, 8) are associated may be arranged in at least one holder (12), **characterised in that** the identifiers (6, 7, 8) taken off the relevant tools and/or tool parts (1, 2, 4) are arranged on the holder(s) (12) in which the tools and/or tool parts (1, 2, 4) are or will be arranged and then the identifiers (6, 7, 8) of the tools and/or tool parts (1, 2, 4), which identifiers (6, 7, 8) have been arranged on the relevant holder(s) (12), are read.

22. Method according to claim 20 or 21, wherein a plurality of holders (12) is used each of which has its own identifier (18) associated with it, **characterised in that**, in addition to the identifiers (6, 7, 8) of the tools and/or tool parts (1, 2, 4), the identifiers (18) of the holders (12) are also read and the read identifiers (6, 7, 8) of the tools and/or tool parts (1, 2, 4) and the read identifiers (18) of the holders (12) are associated with one another.

23. Method according to any one of claims 20 to 22, **characterised in that** it is part of a method for controlling the machine tool (21), wherein information regarding the tools and/or tool parts (1, 2, 4) and/or the holders (12) is associated with the read identifiers (6, 7, 8) of the tools and/or tool parts (1, 2, 4) and/or, respectively, with the read identifiers (18) of the holders (12), and the associated information is evaluated and the machine tool (21) is controlled in dependence upon the result of the evaluation.

## Revendications

1. Système d'identification d'outils et/ou de parties d'outillage (1, 2, 4) de machines-outils, en particulier des machines de poinçonnage (21), comprenant au moins un signe distinctif (6, 7, 8) affecté à des outils ou, respectivement, au moins un signe distinctif (6, 7, 8) affecté à des parties d'outillage (1, 2, 4), ainsi qu'un dispositif de détection (19, 28) pour lequel les signes distinctifs (6, 7, 8) sont accessibles dans une position de détection, et au moyen duquel lesdits signes distinctifs (6, 7, 8) sont détectés dans ladite position de détection, **caractérisé par le fait que** les signes distinctifs respectifs (6, 7, 8) des outils ou des parties d'outillage (1, 2, 4) peuvent être placés amoviblement sur les outils ou parties d'outillage respectivement associé(e)s et sont dissociés, dans la position de détection, d'avec les outils ou parties d'outillage (1, 2, 4) respectivement associé(e)s.

2. Système selon la revendication 1, **caractérisé par le fait que** les signes distinctifs respectifs (6, 7, 8) des outils ou des parties d'outillage (1, 2, 4) sont conçus comme des étiquettes remplaçables, notamment comme des étiquettes adhésives.

3. Système selon l'une des revendications précédentes, **caractérisé par le fait que** les signes distinctifs respectifs (6, 7, 8) des outils ou des parties d'outillage (1, 2, 4) peuvent être ou sont respectivement mis en place, sur les outils ou parties d'outillage respectivement associé(e)s, par l'intermédiaire d'une pièce respective de retenue qui les reçoit de manière amovible.

4. Système selon l'une des revendications précédentes, dans lequel les outils ou parties d'outillage (1, 2, 4) sont au moins partiellement magnétiques, **caractérisé par le fait que** les pièces de retenue, destinées aux signes distinctifs respectifs (6, 7, 8) des outils ou des parties d'outillage (1, 2, 4), sont réalisées sous la forme d'aimants de retenue (9, 10, 11) ou présentent un tel aimant.

5. Système selon l'une des revendications précédentes, dans lequel les outils ou parties d'outillage (1, 2, 4), auxquel(le)s des signes distinctifs (6, 7, 8) sont respectivement affectés, peuvent être placé(e)s dans un moins un support (12), **caractérisé par le fait que** les signes distinctifs respectifs (6, 7, 8) des outils ou des parties d'outillage (1, 2, 4) peuvent être sélectivement placés, de manière amovible, sur les outils ou parties d'outillage (1, 2, 4) respectivement associé(e)s, ou sur le ou les support(s) associé(s) (12) ; et sont accessibles par le dispositif de détection (19, 28), en vue de la détection, lorsqu'ils sont placés sur le ou les support(s) (12) considéré(s).

6. Système selon l'une des revendications précédentes, **caractérisé par** la présence d'une pluralité de supports (12) dans lesquels des outils ou des parties d'outillage (1, 2, 4) peuvent être respectivement disposé(e)s ; par le fait qu'un signe distinctif (18), pouvant être détecté au moyen d'un dispositif de détection (19, 28), est affecté à chacun desdits supports (12) ; et par le fait qu'il est prévu un dispositif d'interprétation (20) au moyen duquel les signes distinctifs détectés (6, 7, 8) des outils ou des parties d'outillage (1, 2, 4), et les signes distinctifs détectés (18) des supports (12), peuvent être assignés les uns aux autres.

7. Système selon l'une des revendications précédentes, **caractérisé par le fait que** la disposition considérée des supports (12), dans l'espace d'un magasin, est prévue en tant que signes distinctifs desdits supports.

8. Système selon l'une des revendications précédentes, **caractérisé par le fait que** les signes distinctifs (18) des supports (12) sont prévus sur ces derniers.

9. Système selon l'une des revendications précédentes, **caractérisé par le fait que** les signes distinctifs (18) des supports (12) sont placés amoviblement sur ces derniers.

10. Système selon l'une des revendications précédentes, **caractérisé par le fait que** les signes distinctifs respectifs (6, 7, 8) des outils ou des parties d'outillage (1, 2, 4), et/ou les signes distinctifs (18) des supports (12), peuvent être ou sont respectivement placés dans une zone bien définie du support (12) considéré.

11. Système selon l'une des revendications précédentes, **caractérisé par le fait que** les signes distinctifs respectifs (6, 7, 8) des outils ou des parties d'outillage (1, 2, 4), et/ou les signes distinctifs (18) des supports (12), peuvent être ou sont respectivement placés avec orientation bien définie sur le support (12) considéré.

12. Système selon l'une des revendications précédentes, **caractérisé par le fait que** les signes distinctifs respectifs (6, 7, 8) des outils ou des parties d'outillage (1, 2, 4), et/ou les signes distinctifs (18) des supports (12), peuvent être ou sont respectivement placés dans une zone bien définie et/ou avec orientation bien définie, sur le support (12) considéré, grâce à des ajustements par concordance de formes.

13. Système selon l'une des revendications précédentes, **caractérisé par le fait que** les ajustements par concordance de formes, affectés à la disposition des signes distinctifs respectifs (6, 7, 8) des outils ou des parties d'outillage (1, 2, 4), et/ou aux signes distinctifs (18) des supports (12), sont constitués par des profils intérieurs et extérieurs s'adaptant les uns dans les autres, situés sur le support (12) considéré, ainsi que sur lesdits signes distinctifs (6, 7, 8, 18).

14. Système selon l'une des revendications précédentes, **caractérisé par le fait que** les signes distinctifs (18) des supports (12) présentent des caractéristiques qui correspondent aux caractéristiques des signes distinctifs respectifs (6, 7, 8) des outils ou des parties d'outillage (1, 2, 4), selon au moins l'une des revendications 2 à 4.

15. Système selon l'une des revendications précédentes, **caractérisé par le fait que** les outils ou les parties d'outillage (1, 2, 4) et/ou les supports (12) considérés comprennent, outre les signes distinctifs (6, 7, 8, 18) pouvant y être placés amoviblement, des signes distinctifs de même contenu qui y sont placés de manière inamovible.

16. Système selon l'une des revendications précédentes, **caractérisé par le fait que** le dispositif de détection, affecté à la détection des signes distinctifs respectifs (6, 7, 8) des outils ou des parties d'outillage (1, 2, 4), est prévu en tant que dispositif de détection (19, 28) affecté à la détection des signes distinctifs (18) des supports (12).

17. Système selon l'une des revendications précédentes, **caractérisé par le fait qu'**il fait partie intégrante d'une commande par ordinateur (29) de la machine-outil (21), sachant que le dispositif de détection (19, 28) affecté à la détection des signes distinctifs respectifs (6, 7, 8) des outils ou des parties d'outillage (1, 2, 4), et/ou le dispositif de détection (19, 28) affecté à la détection des signes distinctifs (18) des supports (12), est (sont) en liaison avec une unité de calcul (30) de ladite commande par ordinateur (29) de la machine-outil (21).

18. Système selon l'une des revendications précédentes, **caractérisé par le fait que** des informations relatives aux outils ou aux parties d'outillage (1, 2, 4) respectivement associé(e)s aux signes distinctifs détectés (6, 7, 8), et/ou relatives aux supports (12) associés aux signes distinctifs détectés (18), sont stockées dans la commande par ordinateur (29) de la machine-outil (21).

19. Système selon l'une des revendications précédentes, **caractérisé par le fait que** des modifications peuvent être apportées aux informations stockées dans la commande par ordinateur (29) de la machine-outil (21), et relatives aux outils ou aux parties d'outillage (1, 2, 4) respectivement associé(e)s aux signes distinctifs détectés (6, 7, 8) ; et/ou aux informations correspondantes relatives aux supports (12) associés aux signes distinctifs détectés (18).

20. Procédé pour l'identification respective d'outils ou de parties d'outillage (1, 2, 4) de machines-outils, en particulier de machines de poinçonnage (21), mis en oeuvre à l'aide d'un système selon l'une des revendications précédentes, **caractérisé par le fait que** les signes distinctifs (6, 7, 8), respectivement affectés aux outils ou aux parties d'outillage (1, 2, 4), sont respectivement enlevés des outils ou des parties d'outillage (1, 2, 4) considéré(e)s, puis détectés dans l'enchaînement.

21. Procédé selon la revendication 20, dans lequel des outils ou parties d'outillage (1, 2, 4), auxquel(le)s des signes distinctifs (6, 7, 8) sont respectivement affectés, peuvent être mis(es) en place dans au moins un support (12), **caractérisé par le fait que** les signes distinctifs (6, 7, 8), respectivement enlevés des outils ou des parties d'outillage (1, 2, 4) considéré(e)s, sont placés sur le ou les support(s) (12) dans lequel (lesquels) les outils ou les parties d'outillage (1, 2, 4) sont mis(es) en place ; et **par le fait que** les signes distinctifs respectifs (6, 7, 8) des outils ou des parties d'outillage (1, 2, 4), qui sont situés sur le ou les support(s) (12) considéré(s), sont détectés dans l'enchaînement.

22. Procédé selon la revendication 20 ou 21, dans lequel il est fait usage d'une pluralité de supports (12) auxquels un signe distinctif propre (18) est respectivement associé, **caractérisé par le fait que** les signes distinctifs (18) des supports (12) sont détectés eux aussi, en plus des signes distinctifs respectifs (6, 7, 8) des outils ou des parties d'outillage (1, 2, 4) ; et **par le fait que** les signes distinctifs détectés (6, 7, 8) des outils ou des parties d'outillage (1, 2, 4), et les signes distinctifs détectés (18) des supports (12), sont assignés les uns aux autres.

23. Procédé selon l'une des revendications 20 à 22, **caractérisé par le fait qu'**il fait partie d'un procédé de commande de la machine-outil (21), sachant que des informations, concernant respectivement les outils ou les parties d'outillage (1, 2, 4), ou bien les supports (12), sont associées aux signes distinctifs détectés (6, 7, 8) des outils ou des parties d'outillage (1, 2, 4), et/ou aux signes distinctifs détectés (18) des supports (12), puis les informations associées sont interprétées ; et **par le fait que** la machine-outil (21) est commandée en fonction du résultat de l'interprétation.
